# DEMANDE DE BREVET EUROPEEN

(11) **EP 0 624 461 A1**
(43) Date de publication de la demande: **17.11.1994**
(21) Numéro de dépôt: 94401030.5
(22) Date de dépôt: 10.05.1994
(51) Int. Cl.: B32B 17/10, C09J 5/02, C08J 5/12

(54) **Vitrages feuilletés et procédé de fabrication**

(30) Priorité: 13.05.1993 FR 9305751
(71) Demandeur: SAINT GOBAIN VITRAGE INTERNATIONAL, F-92400 Courbevoie (FR); ASAHI GLASS COMPANY LTD., Chiyoda-ku Tokyo 100 (JP)
(72) Inventeur: Bravet, Jean-Louis, F-60150 Thourotte (FR); Hirano, Eiji, Yokohamashi, Kanagawaken (JP); Jandeleit, Otto, D-52477 Alsdorf (DE); Miyasaka, Seiichi, Yokosukashi, Kanagawaken (JP)
(74) Mandataire: Muller, René

(57) **Abrégé**

L'invention concerne un vitrage feuilleté de sécurité comprenant un substrat monolithique ou feuilleté en verre et/ou en matière plastique et une feuille de matière plastique comprenant au moins une couche de polyuréthane extérieure présentant des propriétés de surface.

Selon l'invention, le vitrage est muni sur au moins une zone de la couche de polyuréthane d'une précouche de collage compatible avec une couche de colle déposée ultérieurement, cette précouche étant déposée après un traite- ment électrique appliqué sur au moins la zone de la couche de polyuréthane devant recevoir la précouche, ce traitement électrique étant choisi parmi les traitements du type de la décharge couronne.

## Description

La présente invention concerne les vitrages feuilletés dits asymétriques formés d'un support monolithique ou feuilleté en verre et/ou en matière plastique et d'au moins une feuille de matière plastique comprenant au moins une couche de polyuréthane.

Ces vitrages peuvent être utilisés en tant que vitrages de véhicule, notamment en tant que pare-brise d'automobile, d'avion, de train, ou encore en tant que vitrages bâtiment. Le montage de ces vitrages dans la baie d'une carrosserie automobile par exemple, à l'aide d'un joint profilé en matière élastique est maintenant remplacé généralement par un montage par collage du vitrage directement sur la carrosserie. En effet, ce type de montage présente des avantages et notamment il permet le maintien du pare-brise dans la baie de la carrosserie en cas de choc violent, il peut être automatisé et en outre il autorise un montage affleurant du vitrage à la carrosserie ce qui outre l'amélioration de l'esthétique du véhicule, a comme avantage une réduction du coefficient de pénétration du véhicule dans l'air.

Dans le cas du montage d'un vitrage feuilleté classique, c'est-à-dire d'un vitrage formé de deux feuilles de verre et d'une feuille intercalaire en un matériau absorbeur d'énergie tel que le polyvinylbutyral, le collage du vitrage sur un repli de la tôle de la carrosserie est réalisé par dépôt d'un cordon adhésif convenable sur une bordure émaillée disposée sur la périphérie de la face orientée vers l'habitacle, destinée à protéger l'adhésif des rayonnements U.V et aussi destinée à cacher à la vue un joint de colle inesthétique.

Dans le cas des vitrages de sécurité entrant dans le cadre de l'invention, formés d'un support rigide et d'au moins une feuille de matière plastique souple présentant une couche de polyuréthane extérieure, lorsque ladite feuille de matière plastique doit remplir le rôle d'un absorbeur d'énergie, il est nécessaire de coller directement le pourtour de cette feuille sur le cadre de la baie de carrosserie. Un cordon de colle convenable peut être celui utilisé pour le collage des vitrages feuilletés dits classiques évoqués précédemment. Ce cordon est généralement en polyuréthane à deux composants ou en polyuréthane à un composant durcissable en présence d'humidité.

Lorsqu'on réalise avec ce cordon le collage direct de la feuille de matière plastique sur le cadre de la baie, l'adhésion finalement obtenue n'est pas entièrement satisfaisante, les forces d'adhésion n'étant pas suffisantes à l'origine ou ne se conservant pas suffisamment dans le temps. Cette mauvaise adhésion est due notamment à la présence d'agent anti-adhérant à la surface de la couche de polyuréthane provenant du procédé de fabrication par coulée sur un film support en matière plastique tel que du polyester revêtu d'un agent de séparation par exemple un produit à base de silicone.

L'invention propose un vitrage prêt à être monté par collage dans une baie et qui présente une bonne aptitude au collage et qui la conserve même après avoir été stocké pendant une durée importante, par exemple de l'ordre de plusieurs mois.

Le vitrage selon l'invention comprend un substrat monolithique ou feuilleté en verre et/ou en matière plastique et au moins une feuille en matière plastique comprenant au moins une couche de polyuréthane extérieure qui est pourvue sur au moins une zone d'une précouche de collage compatible avec une couche de colle à déposer ultérieurement, cette précouche étant déposée après un traitement électrique appliqué sur au moins la zone de la couche de polyuréthane devant recevoir la précouche et destinée à modifier la tension superficielle de la couche de polyuréthane dans cette zone, le traitement électrique étant choisi parmi les traitements du type de la décharge couronne ou l'action d'un champ électrique.

La précouche peut être déposée directement après le traitement électrique.

De préférence cette précouche est déposée dans un délai compris entre 24 heures et 1 mois après ce traitement électrique. Une durée plus importante peut encore convenir, sans pour autant dépasser normalement 3 mois.

En effet, les essais selon l'invention ont montré que l'adhésion obtenue après un tel délai se révèle être meilleure qu'elle ne l'est lorsque la précouche est déposée directement après le traitement corona.

Selon une forme préférée de l'invention, le traitement électrique est une décharge couronne encore appelée traitement corona.

La zone traitée peut être au moins une partie de la périphérie du vitrage, généralement toute la périphérie ou la zone correspondant à l'emplacement du cordon de colle destiné au collage du vitrage sur une baie de carrosserie.

La zone traitée peut être aussi une zone située plus à l'intérieur du vitrage, par exemple lorsqu'il s'agit de traiter la zone correspondant à l'emplacement d'un support de rétroviseur.

Selon une forme de réalisation du vitrage selon l'invention, la précouche déposée après le traitement électrique est constituée d'un premier cordon de colle en une matière compatible avec le cordon de colle déposé ultérieurement. Ce cordon de colle déposé ultérieurement est notamment celui utilisé pour le montage par collage des vitrages feuilletés sur le cadre des baies de carrosserie.

C'est généralement un cordon ou mastic en polyuréthane à un composant durcissable à l'humidité tel que décrit dans les publications US 3 707 521 et US 3 779 794 ou un cordon de mastic en polyuréthane à deux composants tel que décrit dans les publications EP 0 153 456 et EP 0 238 890. Ce peut être aussi un élastomère à base de polypropylène chargé d'éthylène-propylène-diène-monomères (EPDM).

Le premier cordon constituant la précouche peut être formé de la même matière ou d'une matière appartenant à la même famille chimique que le cordon de colle déposé ultérieurement.

Lorsque la précouche est constituée du premier cordon décrit ci-dessus, il est avantageux de la former directement par extrusion sur la couche de polyuréthane ayant subi le traitement électrique.

En variante, la précouche peut être constituée d'un primaire choisi parmi des compositions de traitement réactives comportant un excès de NCO stables, des compositions réactives comportant un excès de groupes OH stables, des compositions à base de polyuréthane, ou encore d'autres compositions destinées à améliorer l'adhésion du cordon de colle déposé ultérieurement.

Des primaires ou compositions de traitement préférés sont notamment des compositions comportant un excès de groupe OH. La composition de traitement ou primaire peut ainsi comprendre les composants de base pour former un polyuréthane à groupes OH libres, le composant polyol étant pris en excès, en termes d'équivalents par rapport au composant isocyanate, le rapport des groupes NCO aux groupes OH étant inférieur à 1, et de préférence compris entre 0,3 et 0,99.

Dans une variante, la composition de traitement ou primaire peut être une composition comprenant une résine époxyde à deux composants.

Dans une autre variante, la composition de traitement ou primaire peut être à base d'une résine polyoxasolidone obtenue par condensation d'un isocyanate sur une résine époxyde en excès, en présence d'un catalyseur de type sels d'ammonium quaternaire.

Le composant isocyanate peut être choisi parmi les isocyanates difonctionnels aliphatiques ou aromatiques tels que l'hexaméthylènediisocyanate, le 2,2,4-triméthyl -1,6-hexaméthylènediisocyanate, le bis (4-isocyanatocyclo hexyl)méthane,l'isocyanato 1, 3-isocyanatométhyl-3,5,5-triméthylcyclohexane (IPDI), le toluylène diisocyanate (TDI), les isocyanates de fonctionnalité supérieure à 2, tels les biurets d'isocyanate, les isocyanurates, le diisocyanatodiphényl-méthane partiellement polymérisé et de fonctionnalité comprise entre 2 et 3, etc...

Le composant polyol peut être formé d'au moins un polyol choisi parmi les polyols longs de masse moléculaire comprise entre 400 et 4000 environ tels que les polyétherdiols, polyesterdiols, polycaprolactonediols.

Avantageusement, le composant polyol comprend au moins un polyol long comme cité ci-dessus et au moins un diol de masse moléculaire inférieure, choisi parmi ceux utilisés généralement en tant qu'allongeur de chaîne dans la préparation des polyuréthanes : on peut citer par exemple les : éthylèneglycol,propanediol-1,2,propanediol-1,3,butanediol-1,2,-1,3,-1,4, diméthyl-2,2 propanediol-1,3 (néopentyl glycol), pentanediol-1,5,hexanediol-1,6, octanediol-1,8, décanediol, 1,10, dodécanediol-1,12,cyclohexanediméthanol, bisphénol A, méthyl-2-pentanediol- 2,4,méthyl-3 pentane diol-2,4, éthyl-2-hexanediol-1,3, triméthyl-2,2,4-pentane diol-1,3,diéthylèneglycol, triéthylèneglycol,tétraéthylène glycol,butyne-2-diol-1,4,butènediol-1,4 et décynediol substitués et/ou éthérifiés,hydroquinone-bis-hydroxyéthyléther, bisphénol A éthérifiés par deux ou quatre groupes d'oxyde de propylène, acide diméthylolpropionique.

Le composant polyol peut être formé encore d'un polyol de fonctionnalité supérieure à deux, tels des triols aliphatiques monomères comme le glycérol, le triméthylolpropane, des triols à chaînes polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3.

Le polyol de fonctionnalité supérieure à 2 peut être utilisé seul, notamment lorsque sa masse moléculaire est supérieure à environ 400. Dans une variante, il peut être utilisé en mélange avec au moins un polyol long difonctionnel et/ou avec au moins un diol court.

Le composant polyol peut aussi comprendre un copolymère de chlorure de vinyle à groupements hydroxyles libres. Un copolymère convenable peut être une résine vinylique présentant la structure générale suivante : 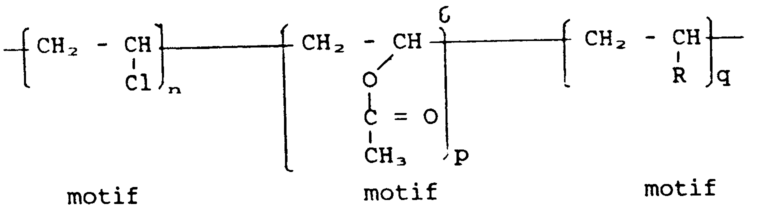
chlorure de vinyle acétate de vinyle alcool vinylique
(R = OH)
acrylate d'hydroxyéthyle
(R=-COOCH₂CH₂OH)
et des masses moléculaires comprises entre 1 000 et 100 000 environ et de préférence entre 2 000 et 50 000 environ, le motif chlorure de vinyle correspondant à environ 50 à 95 % en poids, le motif acétate de vinyle correspondant à environ 2 à 40 % en poids et le motif alcool vinylique ou acrylate d'hydroxyéthyle correspondant à environ 2 à 40 % en poids.

La couche extérieure de polyuréthane traitée selon l'invention présente des propriétés de surface tels que résistance à la rayure et résistance à l'abrasion. Une telle couche est par exemple en un polyuréthane thermodurcissable tel que ceux décrits dans les publications de brevet français 2 398 606 et européen 190 517, ou encore dans les publications JP-A-86-177 241 et JP-A-86-281 118.

Ces couches de polyuréthane peuvent être obtenues par coulée sur un support plan d'un mélange réactionnel d'un composant isocyanate comprenant au moins un isocyanate de fonctionnalité supérieure à 2, par exemple un biuret ou un isocyanurate de l'hexaméthylène diisocyanate et d'un composant polyol comprenant un polyol de fonctionnalité supérieure à 2, par exemple un polyétherpolyol de fonctionnalité 3 ou un polycaprolactone-triol.

L'invention concerne aussi un dispositif pour la mise en oeuvre de procédé de fabrication du vitrage selon l'invention.

Le dispositif peut comprendre un robot industriel dont le bras est équipé d'une tête permettant le traitement électrique selon l'invention, en particulier une décharge couronne.

La tête portée par le bras du robot peut essentiellement être une électrode de décharge formée d'une paire d'électrodes reliée par flexible pour la liaison électrique ou une unité disposée en dehors de la course du robot et contenant un générateur à haute tension. Le champ haute tension produit une décharge couronne entre les deux électrodes disposées à faible distance de la couche de polyuréthane à traiter, par exemple de l'ordre de quelques millimètres. Entre les deux électrodes passe un jet d'air transformé en plasma par la décharge couronne. Ce plasma est transféré à la surface de la couche de polyuréthane.

En variante, le dispositif de décharge couronne peut être prévu pour fonctionner avec une électrode face à la couche à traiter, l'autre électrode étant disposée de l'autre côté du substrat en verre.

Le dispositif peut avantageusement comprendre en outre des moyens pour déposer la précouche après le traitement électrique. Ces moyens peuvent être à nouveau un robot industriel porteur d'une tête pour l'application de la précouche, notamment une tête d'extrusion lorsque la précouche est un cordon.

D'autres avantages et caractéristiques apparaitront dans la suite de la description d'exemples de vitrages selon l'invention.

### EXEMPLE 1

On prépare un vitrage feuilleté asymétrique par assemblage d'une feuille en matière plastique comportant au moins une couche d'une matière plastique ayant des propriétés d'absorbeur d'énergie, par exemple en polyuréthane, au moins une couche de polyuréthane extérieure,avec une feuille de verre bombée.

L'assemblage peut être réalisé par les procédés connus de calandrage suivis d'un cycle d'autoclave. La couche de polyuréthane extérieure est une couche en polyuréthane thermodurcissable obtenue à partir d'un mélange homogène dans les proportions suivantes de :
- 1000 g d'un polyéther d'un poids moléculaire d'environ 450 obtenu par condensation d'oxyde de 1,2-propylène avec du 2,2-bis (hydroxyméthyl)-1-butanol et ayant une teneur en radicaux hydroxyles libres d'environ 10,5 à 12 %, contenant 1 % en poids d'un stabilisant, 0,05 % en poids d'un catalyseur à savoir du dilaurate de dibutylétain et 0,1 % en poids d'un agent nappant,
- 1020 g d'un biuret de 1,6-hexanediisocyanate ayant une teneur en radicaux isocyanates libres d'environ 23,2 %.

On utilise une tête de coulée telle que celle décrite par exemple dans la publication de brevet français 2 347 170. On forme ainsi comme décrit par exemple dans les publications de brevet FR-A-2 480 669 et FR-A-2 546 810 par coulée sur un support souple tendu en polyester revêtu d'un agent de séparation à base de silicone, une couche uniforme qui après polymérisation sous l'effet de la chaleur, par exemple environ 15 minutes à 120°C, présente une épaisseur d'environ 0,12 mm et des propriétés d'autocicatrisation, c'est-à-dire de résistance à la rayure, à l'abrasion et aux agent extérieurs.

Sur cette couche on forme une seconde couche de polyuréthane ayant des propriétés d'absorbeur d'énergie par coulée d'un mélange réactionnel d'un composant isocyanate et d'un composant polyol. Une telle couche est décrite par exemple dans les publications de brevet EP 0 132 198 ou EP O 389 354.

La feuille à deux couches de polyuréthane est retirée du support de coulée et elle est ensuite assemblée avec une feuille de verre comme décrit précédemment.

Le vitrage feuilleté asymétrique est destiné à être utilisé en tant que pare-brise de véhicule automobile par exemple et doit être apte à être monté par collage dans la baie de carrosserie.

A cette fin, la zone du vitrage, c'est-à-dire la zone de la couche de polyuréthane extérieure ayant des propriétés de résistance à la rayure et à l'abrasion, devant recevoir le cordon de colle est soumise conformément à l'invention à un traitement corona.

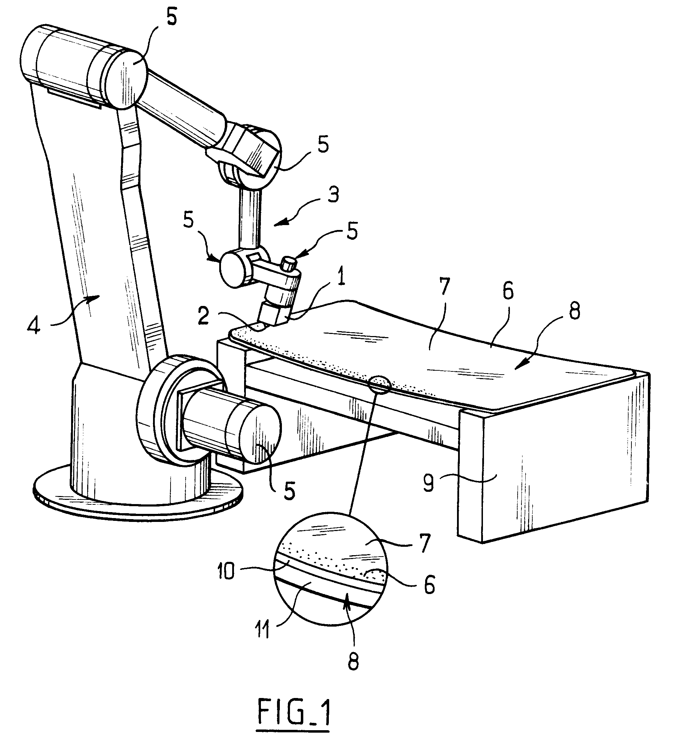

Ce traitement peut se faire à l'aide du dispositif représenté sur la figure 1.

Ce dispositif comprend un ensemble de décharge couronne comprenant une électrode de décharge 1 formée de deux électrodes 2 distantes d'environ 30 mm l'une de l'autre, reliée à un générateur à haute tension et portée au bout du bras 3 d'un robot industriel 4 à plusieurs axes 5 susceptible de lui faire parcourir la trajectoire désirée, par exemple ici le suivi de la zone marginale 6 de la couche extérieure de polyuréthane 7 du vitrage 8 disposé horizontalement sur un bâti 9, la couche de polyuréthane étant orientée vers le haut et faisant partie de la feuille de matière plastique 10 associée à la feuille de verre 11.

Le traitement consiste à actionner l'ensemble équipé d'électrodes, c'est-à-dire à mettre cet ensemble sous tension électrique de façon à créer une décharge couronne entre les deux électrodes et à le déplacer selon la trajectoire désirée à une distance comprise entre 2 et 5 mm environ de la surface de la couche de polyuréthane. Un ensemble de décharge couronne convenable est par exemple l'appareil commercialisé sous l'appellation ARCOJET par la société allemande ARCOTEC GmbH.

La vitesse de déplacement est par exemple de 2 mètres par minute.

48 heures après ce traitement, on dépose sur la zone traitée une composition de primaire préparée au préalable par mélange d'un composant isocyanate : le méthylène diphényldiisocyanate partiellement polymérisé et présentant une fonctionnalité comprise entre 2 et 3, un composant polyol comprenant du polypropylèneglycol de masse moléculaire 440 et du butanediol-1,4.

Les composants sont pris en quantités telles qu'à 0,8 équivalent d'isocyanate correspond 1 équivalent OH dont 0,3 équivalent apporté par le polypropylèneglycol et 0,7 équivalent OH apportés par le butanediol 1,4.

Pour fabriquer cette composition réactionnelle, on mélange 32,7 g de polypropylèneglycol avec 15,3 g de butanediol-1,4. On ajoute de la méthyléthylcétone pour avoir une concentration finale en polyuréthane de 20 % environ. La concentration dépend de l'épaisseur que l'on désire déposer sur la zone à traiter de la couche de polyuréthane. On ajoute au précédent mélange 0,3 g d'un catalyseur, par exemple du dilaurate de dibutylétain (DB-TL). On ajoute ensuite 52 g de méthylènediphényldiisocyanate partiellement polymérisé.

L'étalement de la composition réactive, sur la zone à traiter, s'effectue à l'aide d'un feutre. Après étalement, on polymérise par un chauffage dans une enceinte à 120°C qui procure une température de peau d'environ 85°C durant 5 minutes environ. L'épaisseur de la couche déposée est d'environ 15 à 20 µm.

Le vitrage finalement obtenu est apte à la pose par collage dans l'encadrement d'une baie de carrosserie. Cette aptitude au collage se conserve même après un long stockage du vitrage. Le cordon adhésif utilisé pour le collage peut être tout cordon adhésif utilisé pour le collage direct du verre ou d'une bordure émaillée à la baie de carrosserie. On peut citer par exemple un cordon ou mastic en polyuréthane à deux composants ou un cordon ou mastic en polyuréthane à un composant durcissable à l'humidité.

L'adhésion obtenue entre la surface du polyuréthane du vitrage et le cordon adhésif est solide et durable.

Cette adhésion peut être évaluée à l'aide d'un test de pelage sur une éprouvette constituée d'une languette du matériau formant la couche de polyuréthane, de 2 cm de large sur laquelle on a déposé 7 jours après le dépôt de primaire suite au traitement par décharge couronne selon l'invention, un cordon adhésif de même largeur utilisé pour le montage par collage des vitrages dans la baie de carrosserie. Le cordon adhésif utilisé est un joint commercialisé sous l'appellation BETASEAL HV3.

Les mesures d'adhésion par pelage à 180° des éprouvettes sont pratiquées juste après le durcissement dans les conditions normales du mastic de collage, qui est ici de 7 jours.

L'adhésion obtenu est Ho. On mesure aussi l'adhésion après 7 jours supplémentaires dans des conditions de cataplasme humide, conditions connues selon la méthode d'essai RENAULT 1165 H7.

On recherche généralement une rupture cohésive du cordon adhésif, et avec des valeurs au moins égales à 60 N/cm pour Hₒ et au moins égales à 40 N/cm pour H₇.

Les valeurs d'adhésion moyennes, mesurées pour l'exemple 1 sont :
- Hₒ = 100 N/cm
- H₇ = 65 N/cm en moyenne avec une rupture cohésive du cordon de collage.

### EXEMPLE COMPARATIF

On dépose le cordon de colle BETASEAL HV3 directement sur la zone périphérique de la couche de polyuréthane, sans lui avoir fait subir le traitement corona au préalable.

Les valeurs obtenues mesurées dans les conditions décrites précédemment sont :
- Hₒ = 12 N/cm avec une rupture adhésive.
- H₇ = 4 N/cm avec une rupture adhésive.

### EXEMPLE 2

On opère comme dans l'exemple 1 sauf qu'on dépose sur la zone traitée par décharge couronne une composition de primaire formée d'un mélange d'un composant isocyanate : le méthylène diphényldiisocyanate partiellement polymérisé et présentant une fonctionnalité comprise entre 2 et 3, et d'un composant polyol formé essentiellement d'un PVC à terminaisons hydroxyles, de masse moléculaire 5 500 environ et de formule générale : 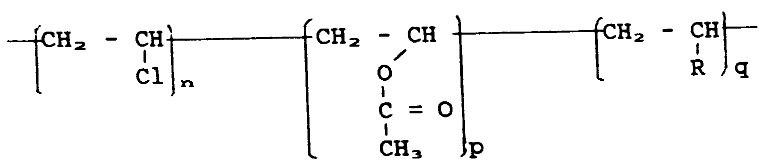
(R=-COOCH₂CH₂OH)
dans laquelle le motif chlorure de vinyle représente 67 % en poids environ, le motif acétate de vinyle représente 11 % en poids environ et le motif acrylate représente 22 % en poids environ.

Les composants sont pris en quantités telles qu'à 0,8 équivalent d'isocyanate correspond 1 équivalent OH.

La composition contient également du dilaurate de dibutylétain en tant que catalyseur du polyuréthane, à raison de 0,03 % du poids des composants du polyuréthane.

La composition appliquée est de préférence sous forme d'une solution du mélange décrit ci-dessus, dans de la méthyléthylcétone, la concentration du mélange réactionnel étant d'environ 25 % en poids.

L'étalement de la composition réactive, sur la zone de la couche de polyuréthane à traiter, s'effectue à l'aide d'un feutre. Après étalement, on polymérise par un chauffage dans une enceinte à 120°C qui procure une température de peau d'environ 85°C durant 5 minutes environ. L'épaisseur après séchage de la couche déposée est d'environ 15 à 25 µm.

Le vitrage finalement obtenu est apte à la pose par collage dans une baie de carrosserie. Cette aptitude au collage se conserve même après un long stockage du vitrage.

Les valeurs d'adhésion moyennes, mesurées à l'aide du test de pelage dans une éprouvette sont :
Hₒ = 95 N/cm en moyenne,
H₇ = 65 N/cm en moyenne avec une rupture cohésive du cordon de collage.

### EXEMPLE 3

On opère comme dans l'exemple 1 sauf qu'après le traitement par décharge couronne de la périphérie de la couche de polyuréthane extérieure on applique directement une précouche d'un cordon de collage par extrusion directement sur la périphérie du vitrage. La précouche déposée peut être avantageusement une couche de polyuréthane mono-composant tel que décrit dans les publications US-3 707 521 et US-3 779 794 ou une couche de polyuréthane à plusieurs composants tel que décrit dans les publications EP 0 153 456 et EP 0 238 890. Dans cet exemple la précouche est le produit commercialisé sous l'appellation "BETASEAL HV3".

Ces couches de polyuréthane sont utilisées généralement en tant que cordon adhésif pour le montage par collage des vitrages dans les encadrements de baie de carrosserie de véhicule à moteur.

Après 7 jours, on dépose un second cordon à base de polyuréthane mono-composant par exemple le produit commercialisé sous l'appellation TEROSTA 85-90 UHV de la société TEROSON.

Les valeurs d'adhésion moyennes obtenues entre la couche extérieure de polyuréthane et l'ensemble précouche et cordon de collage sont respectivement de :
- Hₒ = 100 N/cm
- H₇ = 65 N/cm

La rupture se produit dans l'ensemble constitué par les deux cordons.

Ces valeurs sont entièrement satisfaisantes et obtenues sans utilisation d'un primaire.

### EXEMPLES 4 A 6

On opère comme dans les exemples 1 à 3, respectivement sauf que la couche de polyuréthane extérieure du vitrage est obtenue à partir d'un mélange homogène utilisant les proportions suivantes :
- 942 g d'une polycaprolactone trifonctionnelle ayant une teneur en radicaux OH libres de 9,3 % en poids, contenant 0,015 % en poids de dilaurate de dibutylétain, 0,1 % en poids d'un ester fluoroalkylé comme agent d'étalement et 1 % en poids d'un agent de protection contre les U.V.
- 1000 g d'un triisocyanurate à base de 1,6-hexaméthylènediisocyanate ayant une teneur en radicaux NCO libres de 21,5 % en poids.

Les valeurs d'adhésion moyennes, obtenues après le traitement corona de la périphérie de la couche de polyuréthane sont respectivement :
- pour l'exemple 4 : Hₒ = 98 N/cm
   H₇ = 60 N/cm
- pour l'exemple 5 : Hₒ = 95 N/cm
   H₇ = 60 N/cm
- pour l'exemple 6 : Hₒ = 96 N/cm
   H₇ = 58 N/cm

### EXEMPLES 7 A 9

On opère comme dans les exemples 1 à 3, sauf que le vitrage traité comporte en tant que couche de polyuréthane extérieure une couche obtenue à partir des composants suivants et dans les proportions indiquées :
- 410 g d'un trimère d'hexaméthylènediisocyanate de masse moléculaire 504 g
- 90 g d'hexaméthylènediisocyanate
- 450 g de poly-(ε -caprolactone)polyol trifonctionnel de moléculaire d'environ 300 g
- 20 g de poly(ε -caprolactone)polyol difonctionnel de masse moléculaire d'environ 3000 g.

Cette couche est fabriquée par coulée sur un support souple tendu comme décrit précédemment.

Sur cette première couche, on forme un seconde couche de polyuréthane ayant des propriétés d'absorbeur d'énergie.

Pour assembler ces deux couches au support en verre pour former le vitrage asymétrique, on utilise une couche de polyuréthane thermoplastique.

Lorsque le vitrage est fabriqué, la zone à traiter de la couche extérieure en polyuréthane est soumise au traitement corona comme dans les exemples précédents.

Les valeurs d'adhésion moyennes, obtenues après le traitement selon l'invention sont respectivement :
- pour l'exemple 7: : Hₒ = 90 N/cm
H₇ = 55 N/cm
- pour l'exemple 8: : Hₒ = 90 N/cm
H₇ = 60 N/cm
- pour l'exemple 9: : Hₒ = 88 N/cm
H₇ = 55 N/cm.

Le traitement électrique décrit ci-dessus, selon l'invention, en particulier la décharge couronne, a notamment pour effet une augmentation de la tension superficielle de la partie traitée de la couche de polyuréthane par rapport à la tension superficielle d'une partie non traitée, et une diminution de l'angle de contact de la surface de la partie traitée de la couche de polyuréthane avec une goutte d'eau par exemple, par rapport à l'angle de contact obtenu entre une partie non traitée et cette goutte d'eau.

## Revendications

1. Vitrage feuilleté de sécurité comprenant un substrat monolithique ou feuilleté en verre et/ou en matière plastique et une feuille de matière plastique comprenant au moins une couche de polyuréthane extérieure présentant des propriétés de surface, caractérisé en ce qu'il est muni sur au moins une zone de la couche de polyuréthane d'une précouche de collage compatible avec une couche de colle déposée ultérieurement, cette précouche étant déposée après un traitement électrique appliqué sur au moins la zone de la couche de polyuréthane devant recevoir la précouche et destiné à modifier la tension superficielle de la couche de polyuréthane dans cette zone, ce traitement électrique étant choisi parmi les traitements du type de la décharge couronne ou l'action d'un champ électrique.

2. Vitrage feuilleté selon la revendication 1, caractérisé en ce que le traitement électrique est une décharge couronne.

3. Vitrage feuilleté selon une des revendications 1 ou 2, caractérisé en ce que la zone de la couche munie de la précouche est au moins une partie de la périphérie de la couche de polyuréthane.

4. Vitrage feuilleté selon une des revendications 1 à 3, caractérisé en ce que la précouche est constituée d'un premier cordon de colle en une matière compatible avec le cordon de colle utilisé ultérieurement.

5. Vitrage feuilleté selon la revendication 4, caractérisé en ce que le premier cordon de colle est formé de la même matière que le cordon de colle déposé ultérieurement.

6. Vitrage feuilleté selon une des revendications 4 ou 5, caractérisé en ce que le premier cordon est en polyuréthane.

7. Vitrage feuilleté selon une des revendications 4 à 6, caractérisé en ce que le premier cordon est obtenu par extrusion directement sur la couche de polyuréthane extérieure préalablement assemblée avec le vitrage.

8. Vitrage feuilleté selon une des revendications 1 à 3, caractérisé en ce que la précouche est constituée d'un primaire choisi parmi les compositions réactives comportant un excès de groupes NCO stables, les compositions réactives comportant un excès de groupes OH stables, des compositions à base de polyuréthane.

9. Procédé de fabrication d'un vitrage feuilleté prêt à être monté par collage dans une baie, comprenant un substrat monolithique ou feuilleté en verre et/ou en matière plastique et une feuille de matière plastique comprenant au moins une couche de polyuréthane extérieure présentant des propriétés de surface, caractérisé en ce qu'après assemblage de la feuille de matière plastique avec le substrat, on soumet au moins la zone de la couche de polyuréthane destinée à être collée à l'aide d'un cordon de colle dans la baie à un traitement par un traitement électrique choisi parmi la décharge couronne et le passage dans un champ électrique et on revêt la partie traitée destinée à être collée, d'une précouche de collage compatible avec le cordon de colle.

10. Procédé selon la revendication 9, caractérisé en ce que le traitement électrique est une décharge couronne.

11. Procédé selon une des revendications 9 ou 10, caractérisé en ce que la précouche de collage est formée par extrusion de la matière adhésive directement sur le vitrage.

12. Procédé selon une des revendications 9 à 11, caractérisé en ce que la précouche de collage est déposée dans un délai compris entre 24 heures et 1 mois après le traitement électrique.

13. Dispositif pour la mise en oeuvre du procédé selon une des revendications 9 à 12, caractérisé en ce qu'il comprend un dispositif de décharge couronne comprenant une tête équipée d'électrode et des moyens permettant le déplacement relatif de la tête vis-à-vis du vitrage à traiter.

14. Dispositif selon la revendication 13, caractérisé en ce que les moyens permettant le déplacement sont un robot industriel.
